# EUROPÄISCHE PATENTSCHRIFT

(11) **EP 0 857 366 B1**
(45) Veröffentlichungstag und Bekanntmachung des Hinweises auf die Patenterteilung: **12.01.2000**
(21) Anmeldenummer: 96945694.6
(22) Anmeldetag: 24.10.1996
(51) Int. Cl.: H02G 5/00

(54) **GERÄTE-, ABGANGS- UND/ODER EINSPEISEKASTEN EINES ENERGIEVERTEILSYSTEMS**
GEAR ENCLOSURE, TAP-OFF AND/OR FEED BOX OF A POWER DISTRIBUTION SYSTEM
BOITE D'APPAREILLAGE, DE DERIVATION ET/OU D'ALIMENTATION D'UN SYSTEME DE DISTRIBUTION D'ENERGIE

(30) Priorität: 28.10.1995 DE 19540337
(43) Veröffentlichungstag der Anmeldung: 12.08.1998
(73) Patentinhaber: Moeller GmbH, 53115 Bonn (DE)
(72) Erfinder: VON HASSELT, Georg, D-54576 Hillesheim (DE); AMMANN, Eckhard, D-53819 Seelscheid (DE); MOELLER, Hans, D-53121 Bonn (DE)
(86) Internationale Anmeldenummer: DE9602020
(87) Internationale Veröffentlichungsnummer: WO9715973

(56) Entgegenhaltungen:
- EP-A- 0 437 758
- DE-A- 2 204 996
- DE-B- 1 105 497
- DE-U- 9 318 240
- FR-A- 1 192 018
- US-A- 2 147 023

## Beschreibung

Die vorliegende Erfindung betrifft einen Geräte-, Abgangs- und/oder Einspeisekasten zur Anbringung an einem Schienenkanal eines Energieverteilsystems entsprechend dem Oberbegriff des Anspruchs 1.

Energieverteilsysteme werden vornehmlich in Werkstätten, Labors, Ausstellungsräumen, Krankenhäusern, Gewächshäusern oder dergleichen eingesetzt, in denen der Stromverbrauch den eines üblichen Haushalts übersteigt. Deshalb sind die hier in Rede stehenden Energieverteilsysteme für ein Strom von 40 A und mehr ausgelegt.

Innerhalb der Energieverteilsysteme wird der Strom in sogenannten in Schienenkanälen angeordneten Stromschienen transportiert. Bei den bekannten Energieverteilsystemen sind in jedem Schienenkanal vier Stromschienen vorgesehen, wobei jede Stromschiene die Energie in einer anderen Phase transportiert, so daß ein Schienenkanal einen Ll, L2, L3 und einen N-Leiter aufweist.

Zur Stromentnahme sind an den Schienenkanälen in regelmäßigen Abständen Abgangsstellen vorgesehen, an denen sogenannte Abgangskästen befestigt werden können. Diese Abgangskästen weisen je nach Einsatzzweck Schalt- oder Schutzgeräte, Schmelzsicherungen, Magnetsicherungen oder handelsübliche Schuko-Steckdosen auf. Diese Abgangskästen sind einzeln abnehmbar und können entsprechend den vorliegenden Gegebenheiten der jeweils gewünschten Abgangsstelle angebracht werden.

Der in dem Energieverteilsystem zu verteilende Strom wird über sogenannte Einspeisekästen in die Stromschienen eingespeist. Diese Einspeisekästen werden an der Nahtstelle zweier Schienenkanäle auf diese aufgesetzt und mit einer am Einspeisekasten befindlichen Montagevorrichtung am Schienenkanal gehalten.

Der aus dem Energieverteilsystem entnommene Strom wird über geeignete Kabel dem Endverbraucher, zum Beispiel einer Werkzeugmaschine zugeführt. Um den Strom bei Arbeiten an der Werkzeugmaschine abschalten zu können und/oder um bei einem Defekt, zum Beispiel einem Kurzschluß in der Werkzeugmaschine, das Stromnetz nicht übergebühr zu belasten, sind im Abgangs kasten Schalter, Schütze, Sicherungen oder andere Geärte installiert. Welche und wieviele dieser Geräte im Abgangs kasten angebracht werden, hängt vom jeweiligen Einzelfall ab und kann stark unterschiedlich sein. Um für jeden Anwendungszweck den richtigen Abgangs kasten bereitstellen zu können, verfügen die bekannten Energieverteilsysteme über eine große Anzahl verschieden großer Abgangskästen.

Die Herstellung von einer Vielzahl von unterschiedlich großen Abgangskästen erfordert eine Vielzahl von Werkzeugen und ist folglich sehr kostenintensiv. Auch die Bereithaltung und der Vertrieb dieser Abgangskästen ist aufwendig und erfordert hohe Aufwendungen für die entsprechende Logistik.

Ein weiterer Nachteil der vielen, unterschiedlichen Kästen besteht darin, daß eine spätere Hinzufügung eines Gerätes nur dann möglich ist, wenn der bestehende Abgangs kasten durch einen neuen, größeren ersetzt wird. Hierdurch entstehen ebenfalls unnötige Montagekosten, da die bereits in dem Kasten montierten Geräte zunächst ausgebaut und dann in dem neuen Kasten wieder eingebaut werden müssen. Auch gibt es für den alten Abgangskasten keine Verwendung mehr, so daß dieser entsorgt werden muß.

Die FR-A-1192018 offenbart einen Geräte- und Abgangs kasten zur Anbringung an einem Schienenkanal, die anreihbar sind, so daß eine modulartig aufgebaute Kastenzeile entsteht. Gegenüber der vorgenannten Lösungen ist eine kostengünstigere Erweiterung möglich.

Die Geräte- und Abgangskästen sind jedoch unterschiedlich ausgeführt. Je nachdem welche Kastenanordnung entstehen soll, sind Kästen mit einseitige oder zweiseitige Öffnungen für Leitungsdurchführungen vorhanden. Bei den zuletzt angereihten Kasten muß entweder eine gesonderte Abdeckung, die die Leitungsdurchführungsöffnung verschließt, montiert werden oder es muß ein Gerätekasten mit nur einseitiger Öffnung hergestellt und gelagert werden, was zusätzliche Kosten verursacht. Der Abgangskasten weist außerdem einen wesentlich kleineren Querschnitt gegenüber dem Gerätekasten auf. Daher ist seine Funktion auf das Abgreifen von Strom beschränkt. Geräte können in dem Abgangskasten nicht angeordnet werden, so daß bei Verwendung von Schaltgeräten minderstens immer zwei Kästen erforderlich sind. Eine Erweiterung des Abgangs kastens ist nur auf einer Seite möglich.

Davon ausgehend liegt der vorliegenden Erfindung die Aufgabe zugrunde, einen Geräte-, Abgangs- und/oder Einspeisekasten zu schaffen, der kostengünstig herzustellen ist, der nur einen geringen Lager- und Logistikaufwand benötigt und der im Nachhinein kostengünstig erweitert werden kann.

Als technische Lösung dieser Aufgabe wird erfindungsgemäß vorgeschlagen, einen Geräte- Abgangs- und/oder Einspeisekasten der eingangs genannten Art dahingehend weiterzubilden,daß der Gerätekasten zwei sich gegenüberliegende, identisch ausgebildete Kontaktseiten (14)aufweist, daß jeder Geräte- (4), Abgangs- (2) und Einspeisekasten (6) im wesentlichen den gleichen Querschnitt aufweist und daß die Kontaktseite (14) und/oder die Anbauseite (22) mindestens eine Sollbruchöffnung (20,24) aufweist, wobei jeder Abgangs- oder Einspeisekasten eine eigene Montagevorrichtung aufweist.

Dies hat den Vorteil, daß mit einem einzigen Gerätekasten, einem einzigen Abgangs kasten und einem einzigen Einspeisekasten sämtliche in einem Energieverteilsystem vorkommenden Anforderungen erfüllt werden, denn an den Abgangs kasten können ein, zwei, drei oder mehr Gerätekästen angereiht werden. In den Gerätekästen können die für den jeweiligen Einsatzzweck erforderlichen Geräte untergebracht werden.

Dieser modulartige Aufbau ist so vielseitig und variabel konzipiert, daß alle notwendigen Schalter, Schütze oder Sicherungen in den Abgangs kasten und in einem oder mehreren Gerätekästen untergebracht werden können. Analoges gilt für die Einspeisekästen zur Stromeinspeisung in das Energieverteilsystem. Die Reduzierung der Kastentypen auf drei Grundformen senkt die Fertigungskosten, die Lagerkosten und die Logistikkosten drastisch und ermöglicht gleichzeitig die Erweiterung des Systems in einfacher und kostengünstiger Weise, indem weitere Gerätekästen angereiht werden.
Der Gerätekasten weist zwei sich gegenüberliegende, identisch ausgebildete Kontaktseiten auf, damit der Gerätekasten nicht nur an einem Abgangs- oder Einspeisekasten angereiht werden kann, sondern damit an diesem Gerätekasten auch ein weiterer Gerätekasten anreihbar ist.
Weiterhin ist in der Kontaktseite und der Anbauseite eine Sollbruchöffnung vorgesehen, die bei Bedarf in einfacher Weise aufgebrochen werden kann, so daß eine Öffnung zur Durchführung der Leitungen entsteht.

In einer vorteilhaften Ausgestaltung ist eine Seite des Abgangs- und/oder Einspeisekastens als Anbauseite ausgelegt, die mit einer Kontaktseite des Gerätekastens kompatibel ist, damit der Gerätekasten beim Anreihen an den Abgangs- oder Einspeisekasten eng und bündig anliegt.

In einer vorteilhaften Weiterbildung ist die Kontaktseite und die Anbauseite im wesentlichen eben ausgeführt und senkrecht zum Schienenkanal ausgerichtet, damit ein einfaches Aneinanderreihen der Kästen möglich ist.

In einer bevorzugten Ausführungsform sind Sollbruchöffnungen in der Kontaktseite und in der Anbauseite vorzugsweise an der gleichen Stelle angeordnet, so daß beim Aneinanderreihen der Kästen eine durchgehende Öffnung zum Hindurchführen von Leitungen zur Verfügung steht.

Bei aus Kunststoff gefertigten Kontakt- und Anbauseiten wird diese Sollbruchöffnung vorteilhafterweise durch eine Materialverjüngung bzw. eine Materialschwächung gebildet, die das einfache Entfernen des Kunststoffes innerhalb dieser Materialschwächung ermöglicht. Eine andere Möglichkeit zur Realisierung der Sollbruchöffnung besteht darin, gezielte Ausstanzungen vorzunehmen und nur kleinere Materialstege übrig zu lassen, so daß durch Zerstören der Materialstege das zwischen den Ausstanzungen befindliche Material entfernt werden kann und somit eine Öffnung zur Durchführung der Leitungen entsteht.

In einer anderen bevorzugten Ausführungsform ist der senkrecht zur Längsrichtung des Schienenkanals gelegene Querschnitt des Geräte-, Abgangs- und Einspeisekastens bei allen Kästen im wesentlichen gleich, so daß ein einheitliches Erscheinungsbild entsteht.

Die an einem Schienenkanal eines Energieverteilsystems angebrachte Kastenzeile, die sich aus einem erfindungsgemäßen Abgangs kasten und einem oder mehreren erfindungsgemäßen Gerätekästen oder aus einem erfindungsgemäßen Einspeisekasten und einem oder mehreren erfindungsgemäßen Gerätekästen zusammensetzt, ist kostengünstig herzustellen, da nur wenige Grundtypen von Kästen zum Einsatz kommen und derartige Kastenzeilen schnell, einfach und kostengünstig erweitert werden können, in dem lediglich ein oder mehrere Gerätekästen hinzugefügt werden.

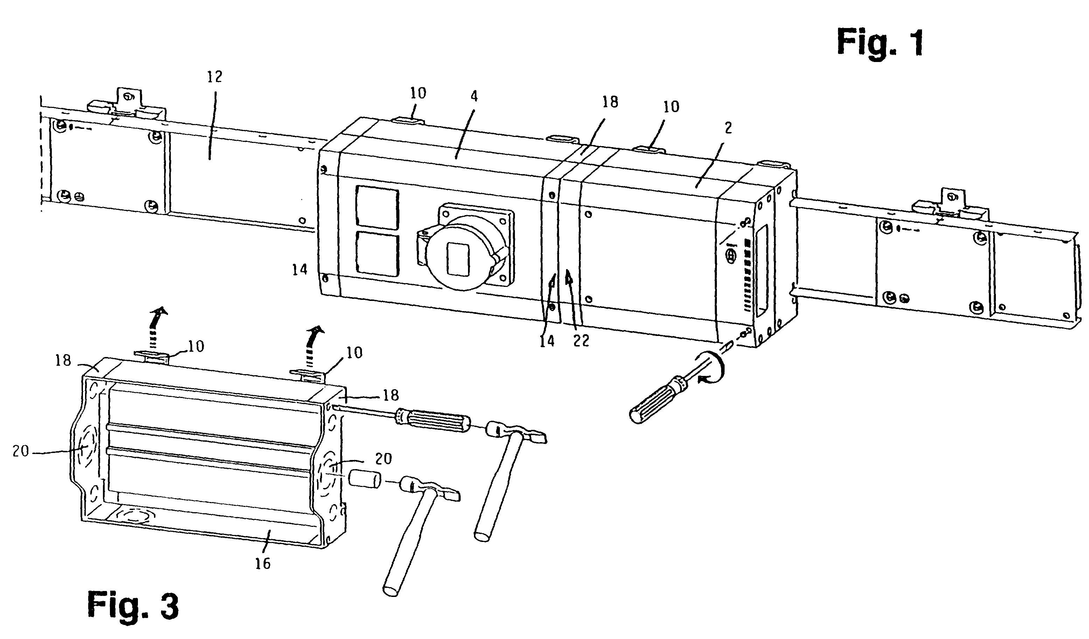

Weitere Vorteile der erfindungsgemäßen Kastenzeile ergeben sich aus der Beschreibung der Ausführungsformen und der beigefügten Zeichnung. Ebenso können die vorstehend genannten und die noch weiter aufgeführten Merkmale erfindungsgemäß jeweils einzeln oder in beliebigen Kombinationen miteinander verwirklicht werden. Die erwähnten Ausführungsformen sind nicht als abschließende Aufzählung zu verstehen, sondern haben vielmehr beispielhaften Charakter. Eine Ausführungsform der Erfindung ist in den Figuren 1 bis 3 der Zeichnung dargestellt und wird im folgenden näher erläutert.
- Figur 1: zeigt eine perspektivische Darstellung einer ersten Ausführungsform einer erfindungsgemäßen Kastenzeile;
- Figur 2: zeigt eine perspektivische Explosionsdarstellung einer zweiten Ausführungsform einer erfindungsgemäßen Kastenzeile;
- Figur 3: zeigt eine perspektivische Darstellung eines Teils eines erfindungsgemäßen Gerätekastens.

Die einzelnen Figuren der Zeichnung zeigen den erfindungsgemäßen Gegenstand teilweise stark schematisiert und sind nicht maßstäblich zu verstehen. Dabei sind die Gegenstände der einzelnen Figuren teilweise stark überproportional vergrößert dargestellt, damit ihr Aufbau besser gezeigt werden kann.

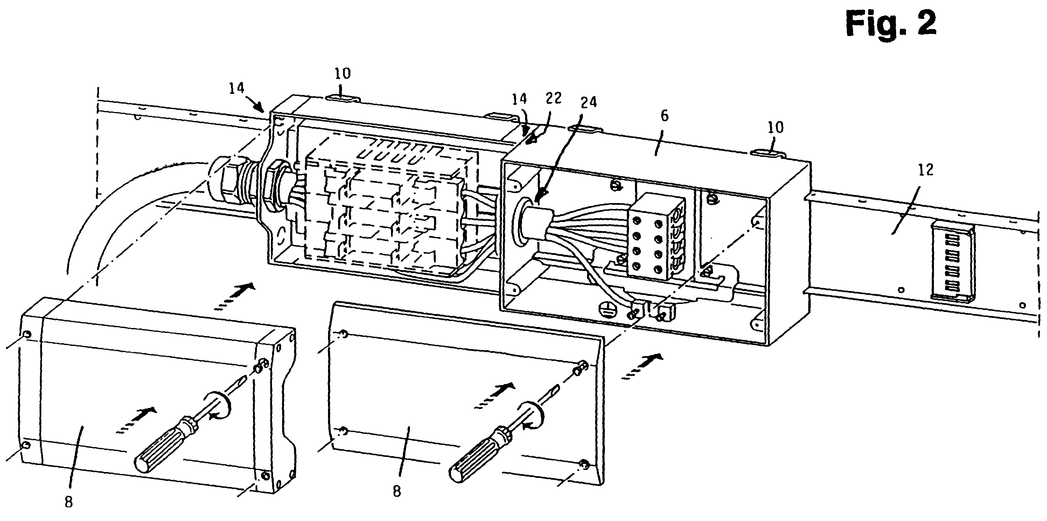

Die in **Figur 1** dargestellte Ausführungsform einer Kastenzeile umfaßt einen Abgangs kasten **2**, an dem ein Gerätekasten **4** bündig angereiht ist, während in **Figur 2** eine zweite Ausführungsform einer erfindungsgemäßen Kastenzeile dargestellt ist, die einen Einspeisekasten **6** und einen daran bündig angereihten Gerätekasten **4** umfaßt.

Jeder Kasten **2, 4 , 6** weist an seiner Rückseite vier federbelastete Halterungen **6** auf, mit denen der Kasten **2**, **4, 6** an einem an einer Wand oder Decke montierten Schienenkanal **12** angebracht ist.

In **Figur 3** ist ein Gerätekasten **4** dargestellt, der ohne seinen Deckel abgebildet ist. Dieser Gerätekasten **4** hat zwei sich gegenüberliegende, identisch ausgebildete Kontaktseiten **14**, die auf ihrer Außenseite im wesentlichen eben ausgeführt sind und die senkrecht zur Längsrichtung des Schienenkanales **12** ausgerichtet sind. Der Gerätekasten **4** setzt sich aus einem als Hutprofil ausgebildeten Aluminiumprofil **16** und zwei daran angebrachten Seitenelementen **18** aus Kunststoff zusammen.

In jedem Seitenelement **18** ist eine Sollbruchöffnung **20** eingearbeitet, die aus einer kreisrunden Materialverjüngung mit drei zusätzlichen, gleichmäßig über den Umfang verteilten Materialstegen gebildet ist.

Entsprechend den Kontaktseiten **14** des Gerätekastens **4** ist am Abgangs kasten **2** und am Einspeisenkasten **6** eine senkrecht zum Schienenkanal **12** ausgerichtete Anbauseite **22** vorgesehen, die sich bündig an die Kontaktseite **14** anfügt. Auch in der Anbauseite **22** ist eine Sollbruchöffnung **24** vorgesehen, die in derselben Position wie die Sollbruchöffnung **20** der Kontaktseite **14** angeordnet ist, so daß bei aneinandergereihten Kästen **2, 4, 6** und bei durchstoßenen Öffnungen an dieser Stelle eine Öffnung zur Durchführung von Leitungskabeln entsteht, wie dies **Figur 2** zu entnehmen ist.

Wie insbesondere der **Figur 1** zu entnehmen ist, haben sowohl der Gerätekasten **4**, als auch der Abgangskasten **2** und der Einspeisekasten **6** denselben Queschnitt, so daß die durch Aneinanderreihung dieser Kästen **2, 4, 6** entstehende Kastenzeile eine durchgehende Außenform und ein einheitliches Erscheinungsbild aufweisen. Einzig eventuell angebrachte Steckdosen **26** oder Schalter (nicht dargestellt) unterbrechen das einheitliche Erscheinungsbild.

## Patentansprüche

1. Geräte-, Abgangs- und/oder Einspeisekasten zur Anbringung an einem Schienenkanal eines Energieverteilsystems, wobei der an dem Schienenkanal (12) montierte Gerätekasten (4) bündig an einen am Schienenkanal (12) montierten Abgangskasten (2), Einspeisekasten (6) oder anderen Gerätekasten (4) anreihbar ist, so daß eine modulartig aufgebaute Kastenzeile entsteht, wobei jeder Gerätekasten eine eigene Montagevorrichtung aufweist, wobei benachbarte Kästen (2, 4, 6) eine Leitungsdurchführung aufweisen,
**dadurch gekennzeichnet, daß** der Gerätekasten zwei sich gegenüberliegende, identisch ausgebildete Kontaktseiten (14)aufweist, daß jeder Geräte- (4), Abgangs- (2) und Einspeisekasten (6) im wesentlichen den gleichen Querschnitt aufweist und daß die Kontaktseite (14) und/oder die Anbauseite (22) mindestens eine Sollbruchöffnung (20,24) aufweist, wobei jeder Abgangs- oder Einspeisekasten eine eigene Montagevorrichtung aufweist.

2. Abgangs- und/oder Einspeisekasten nach Anspruch 1,
**gekennzeichnet durch** eine Anbauseite (22), die mit der Kontaktseite (14) des Gerätekastens (4) kompatibel ist.

3. Abgangs- und/oder Einspeisekasten nach wenigstens einem der vorhergehenden Ansprüche
**dadurch gekennzeichnet, daß** die Kontaktseite (14) und/oder die Anbauseite (22) im wesentlichen eben und senkrecht zum Schienenkanal (12) ausgerichtet ist.

4. Abgangs- und/oder Einspeisekasten, nach wenigstens einem der vorhergehenden Ansprüche,
**dadurch gekennzeichnet, daß** die Sollbruchöffnung (20) der Kontaktseite (14) der Sollbruchöffnung (24) der Anbauseite (22) auf gleicher Position gegenüberliegt.

5. Abgangs- und/oder Einspeisekasten nach wenigstens einem der vorhergehenden Ansprüche,
**dadurch gekennzeichnet, daß** sich an einen Abgangskasten (2) gemäß wenigstens einem der vorhergehenden Ansprüche oder an einen Einspeisekasten (6) gemäß wenigstens einem der vorhergehenden Ansprüche mindestens ein Gerätekasten (4) gemäß wenigstens einem der vorhergehenden Ansprüche bündig anschließt

## Claims

1. Gear enclosure, tap-off and/or feed box for mounting to a busbar duct of a power distribution system, while the gear enclosure (4) mounted to the busbar duct (12) may be added in a row and with a flush joint to a tap-off box (2), to a feed box (6), to or another gear enclosure (4) mounted to the busbar duct (4), thus creating a box row with a modular-like setup, while every gear enclosure has a mounting device of its own, while neighbouring boxes (2, 4, 6) present a cable passage, **characterized in that** the gear enclosure presents two contact sides (14) opposing one another and having an identical design, in that every gear enclosure (4), tap-off (2), and feed box (6) presents essentially the same cross-section, and in that the contact side (14) and/or the mounting side (22) present at least one opening (20, 24) braking at a predetermined point, while every tap-off or feed box has its own mounting device.

2. Tap-off and/or feed box as claimed in claim 1, **characterized by** a mounting side (22) which is compatible with the contact side (14) of the gear enclosure (4).

3. Tap-off and/or feed box as claimed at least in one of the foregoing claims **characterized in that** the contact side (14) and/or the mounting side (22) are aligned essentially in an even way and vertically with regard to the busbar duct (12).

4. Tap-off and/or feed box as claimed at least in one of the foregoing claims, **characterized in that** the opening (20) braking at a predetermined point of the contact side (14) is located at the same position opposite to the opening (24) braking at a predetermined point of the mounting side (22).

5. Tap-off and/or feed box as claimed at least in one of the foregoing claims, **characterized in that** at least one gear enclosure (4) according to at least one of the foregoing claims is added with a flush joint to a tap-off box (2) according to at least one of the foregoing claims, or to a feed box (6) according to at least one of the foregoing claims.

## Revendications

1. Boîte d'appareillage, de dérivation et/ou d'alimentation à monter sur la canalisation d'un système de distribution d'énergie, la boîte d'appareillage (4) montée sur la canalisation (12) pouvant être accolée sans joint à une boîte de dérivation (2), d'alimentation (6) ou à une autre boîte d'appareillage (4) montée sur la canalisation (12), de manière à créer une ligne de boîtes à structure modulaire, chaque boîte d'appareillage présentant un mécanisme de montage propre, des boîtes contiguës (2, 4, 6) présentant un passage de ligne, **caractérisée en ce que** la boîte d'appareillage présente deux côtés de contact (14) opposés, formés de manière identique, en ce que chaque boîte d'appareillage (4), de dérivation (2) et d'alimentation (6) présente fondamentalement la même section, et en ce que le côté de contact (14) et/ou le côté de montage (22) présente au moins une ouverture destinée à la rupture (20, 24), chaque boîte de dérivation ou d'alimentation présentant un mécanisme de montage propre.

2. Boîte de dérivation et/ou d'alimentation selon la revendication 1, **caractérisée par** un côté de montage (22), compatible avec le côté de contact (14) de la boîte d'appareillage (4).

3. Boîte de dérivation et/ou d'alimentation selon l'une des revendications précédentes au moins, **caractérisée en ce que** le côté de contact (14) et/ou le côté de montage (22) sont essentiellement plans et perpendiculaires à la canalisation (12).

4. Boîte de dérivation et/ou d'alimentation selon l'une des revendications précédentes au moins, **caractérisée en ce que** la position de l'ouverture destinée à la rupture (20) du côté de contact (14) est directement opposée à celle de l'ouverture destinée à la rupture (24) du côté de montage (22).

5. Boîte de dérivation et/ou d'alimentation selon l'une des revendications précédentes au moins, **caractérisée en ce qu'** une boîte d'appareillage (4) selon l'une des revendications précédentes au moins se trouve accolée à une boîte de dérivation (2) selon l'une des revendications précédentes au moins ou sur une boîte d'alimentation (6) selon l'une des revendications précédentes au moins.
